# EUROPÄISCHE PATENTSCHRIFT

(11) **EP 2 168 794 B1**
(45) Veröffentlichungstag und Bekanntmachung des Hinweises auf die Patenterteilung: **14.11.2012**
(21) Anmeldenummer: 09012149.2
(22) Anmeldetag: 24.09.2009
(51) Int. Cl.: H02M 3/00, B60H 1/00, B60H 1/22

(54) **Elektrisches Heizsystem und Verfahren zur stufenlosen Ansteuerung einer elektrischen Heizeinrichtung**
Electrical heating system and method for infinite adjustment of an electrical heating device
Système de chauffage électrique et procédé de commande en continu d'un dispositif de chauffage électrique

(30) Priorität: 26.09.2008 DE 102008049277; 24.04.2009 DE 102009018546
(43) Veröffentlichungstag der Anmeldung: 31.03.2010
(73) Patentinhaber: Behr GmbH & Co. KG, 70469 Stuttgart (DE)
(72) Erfinder: Baruschke, Wilhelm, 73117 Wangen (DE); Lochmahr, Karl, Dipl.-Ing., 71665 Vaihingen/Enz (DE)
(74) Vertreter: Grauel, Andreas

(56) Entgegenhaltungen:
- EP-A- 1 157 868
- EP-A- 1 233 468
- GB-A- 2 446 261

## Beschreibung

Die Erfindung betrifft ein elektrisches Heizsystem gemäß dem Oberbegriff des Anspruchs 1 sowie ein Verfahren zur stufenlosen Ansteuerung einer elektrischen Heizeinrichtung gemäß dem Oberbegriff des Anspruchs 10, wie durch EP 1 157 868 A2 gezeigt.

Um den Innenraum eines Kraftfahrzeugs aufzuwärmen, ist es meist in der Startphase oder bei geringen Außentemperaturen notwendig, zuzuheizen, da die heutzutage eingesetzten verbrauchsoptimierten Fahrzeuge nicht ausreichend Abwärme produzieren. Dabei ist es bevorzugt, elektrische PTC-Zuheizer einzusetzen, da sie kostengünstig, spontan spürbar - das heißt, die elektrische Leistung wird sofort in Wärme umgesetzt - und platzsparend sind.

Auch in Fahrzeugen ohne konventionellen Kühlmittelkreislauf, z. B. in Elektrokraftfahrzeugen, muss die Heizleistung zur Temperierung der Fahrzeugkabine anderweitig bereitgestellt werden.

Hierzu werden im Allgemeinen elektrische Stand-Alone-PTC-Heizeinrichtungen eingesetzt, wobei zur Sicherstellung eines hinreichenden Innenraumkomforts Heizleistungen von größer 5 kW erforderlich sind.

Bekannte PTC-Zuheizer, die in herkömmlichen Fahrzeugen mit geringer Motorwärme (z. B. bei Dieselmotoren) eingesetzt werden, weisen in der Regel Heizleistungen unterhalb von 1,5 kW auf und werden typischerweise an dem 12V-Bordnetz betrieben. Die Ansteuerung erfolgt dabei entweder gestuft,
wobei ein Relais eingesetzt wird, oder stufenlos über eine Pulsweitenmodulation (PWM).

In Elektrofahrzeugen kann jedoch für die Traktionseinrichtungen ein zweites Bordnetz mit einer Spannung oberhalb von 300V vorhanden sein, welches ebenfalls genutzt werden kann, um die PTC-Heizeinrichtung zu versorgen. Jedoch kann die stufenlose Ansteuerungsmethodik für 12V-PTC-Zuheizer, die zur Realisierung einer geeigneten Innenraumtemperaturregelung in einem Kraftfahrzeug zwingend erforderlich ist, nicht ohne weiteres auf elektrische Stand-Alone-Hochvolt-Heizeinrichtungen übertragen werden. Diese Problematik ist unter anderem durch die sehr hohen Einschaltströme, welche unter Umständen in jedem PWM-Zyklus auftreten, die nochmals vergrößerten PTC-Einschaltstromspitzen aufgrund des bekannten VDR-Effekts (voltage dependent resistor) bei höheren Spannungen und eine unzulässig hohe Bornetzbelastung durch sprunghafte Stromänderungen bedingt. Auch ist die elektromagnetische Verträglichkeit (EMV) in solch einem Fall kritisch.

Um eine stufenlose "geglättete Betriebsweise" einer elektrischen Heizeinrichtung beispielsweise in Form eines PTC-Zuheizers zu erreichen, kann prinzipiell ein Linearregler eingesetzt werden, wobei die anfallende Abwärme des Linearreglers für Heizzwecke mit einbezogen wird. Aufgrund der hohen Verlustleistung im Regler, welche mehrere kW beträgt, ist eine derartige Lösung technisch jedoch nur mit sehr hohem Aufwand realisierbar.

Aus DE 103 27 342 A1 ist ein elektrisches Heizungssystem bekannt, welches eine elektrisch isolierende Trägerschicht, eine auf dieser angeordnete, elektrisch leitende Heizschicht, wenigstens zwei im Abstand zueinander an der Heizschicht angeordnete und mit dieser im elektrisch leitenden Kontakt stehende Elektroden und eine mit diesen elektrisch verbundene Stromquelle aufweist. Bei dem in DE 103 27 342 A1 beschriebenen Heizungssystem handelt es sich jedoch um eine Applikation aus der Stationärtechnik, wobei die verwendete Stromquelle ein AC/DC-Wandler, eingangsseitig 220 V (1-Phasen-Wechselstrom) oder 380 V (3-Phasen-Drehstrom), vorzugsweise primär getaktet, mit einer Stromsteuereinheit ist, von welcher der die Heizschicht durchfließende Strom gesteuert wird.

Daher ist es die Aufgabe der vorliegenden Erfindung, ein elektrisches Heizsystem sowie ein Verfahren zur stufenlosen Ansteuerung einer elektrischen Heizeinrichtung für ein Kraftfahrzeug vorzusehen, mittels welcher eine verlustleistungsarme Regelung mit geringem technischem Aufwand realisierbar ist.

Die Aufgabe der vorliegenden Erfindung wird durch ein elektrisches Heizsystem mit den Merkmalen gemäß Anspruch 1 sowie durch ein Verfahren zur stufenlosen Ansteuerung einer elektrischen Heizeinrichtung mit den Merkmalen gemäß Anspruch 10 gelöst. Vorteilhafte Weiterbildungen der vorliegenden Erfindung sind in den Unteransprüchen definiert.

Da bei der erfindungsgemäßen Lösung zur stufenlosen Steuerung einer PTC-Heizeinrichtung die Spannung der PTC-Heizeinrichtung bzw. des PTC-Heizelements mittels des DC/DC-Wandlers eingestellt bzw. geregelt wird, kann eine verlustleistungsarme Regelung mit geringem technischen Aufwand erzielt werden. Auch ist die hierdurch erzielte "geglättete Betriebsweise" der PTC-Heizeinrichtung mittels des Schaltreglers in Form des DC/DC-Wandlers hinsichtlich der elektromagnetischen Verträglichkeit sehr vorteilhaft für das Bordnetz eines Kraftfahrzeugs. Durch die PTC-Charakteristik ist das System "elektrische Heizeinrichtung/Schaltregler" bzw. PTC-Heizelement/DC/DC-Wandler eigensicher und regelt die Heizleistung beispielsweise bei einem Ausfall des Klimagebläses auf unkritische Werte zurück. Unzulässige Übertemperaturen werden ohne zusätzliche Schutzmaßnahmen vermieden.

Gemäß einer bevorzugten Ausführungsform ist der DC/DC-Wandler ein Tiefsetzsteller. Dies ist besonders vorteilhaft, da mittels dieser Konfiguration typischerweise ein Wirkungsgrad > 90 % erzielt werden kann. Aufgrund des hohen Wirkungsgrads des Schaltreglers in Form eines Tiefsetzstellers ist die anfallende Verlustleistung auch bei den oben genannten Heizleistungen von ≥ 5 kW bei einer Anordnung im Luftkanal eines Klimagebläses ohne größeren Aufwand abführbar.

Gemäß noch einer weiteren bevorzugten Ausführungsform ist die elektrische Heizeinrichtung eine Hochvolt-Heizeinrichtung. Durch diese Ausführung kann das elektrische Heizsystem durch sekundäre Bordnetze in einem Kraftfahrzeug mit einer Spannung von ≥ 300 V versorgt werden.

Alternativ kann das elektrische Heizsystem auch in konventionellen 12V-Bordnetzen eingesetzt werden. In diesem Fall wird der DC/DC-Wandler vorzugsweise als Hochsetzsteller, z. B. von 12V auf 300V, mit stufenloser Steuerbarkeit der Sekundärspannung vorgesehen.

Vorzugsweise ist die elektrische Heizeinrichtung ein elektrischer PTC-Zuheizer, insbesondere.für eine Kraftfahrzeugklimaanlage.

Gemäß einer weiteren bevorzugten Ausführungsform ist die elektrische Heizeinrichtung eine Stand-Alone-Vorrichtung. Durch Vorsehen der elektrischen Heizeinrichtung als Stand-Alone-Elektroheizer, dessen Heizleistung mittels DC/DC-Wandler stufenlos steuerbar ist, kann ein hoher Komfort bereitgestellt werden.

Erfindungsgemäß umfasst das elektrische Heizsystem weiterhin einen Ausblastemperaturregler, welcher dem DC/DC-Wandler eine Stellgröße zuführt.

Erfindungsgemäß generiert der DC/DC-Wandler eine Ausgangsspannung, insbesondere zwischen 0V und der sekundären Bordnetzspannung, aus der Stellgröße.

Gemäß noch einer weiteren bevorzugten Ausführungsform ist die PTC-Heizleistung durch die Ausgangsspannung des DC/DC-Wandlers einstellbar.

In einer weiteren Ausführungsform wird die maximale Ausgangsspannung des DC/DC-Wandlers auf einen Wert begrenzt, der an der PTC-Heizeinrichtung keinerlei Isolations- und Schutzmaßnahmen erforderlich macht. Dieser Wert liegt bevorzugt bei 60V DC. Die PTC-Heizelemente werden bei diesem Spannungswert auf maximale Heizleistung ausgelegt. Die Heizleistung ist damit im Bereich von 0V bis 60V über den DC/DC-Wandler stufenlos einstellbar.

Die Ansteuervorrichtung per DC/DC-Wandler mit einer maximalen Ausgangsspannung bietet auf einfache Art und Weise eine Kompromissmöglichkeit zwischen vorteilhafter Leistungsübertragung (möglichst hohe Spannung) und minimalen (bzw. gar keinen) lsolationsmaßnahmen an der PTC-Heizeinrichtung. Der PTC-Aufbau entspricht damit weitgehend demjenigen eines bekannten 12V-PTC-Zuheizers.

Weiterhin ist es bevorzugt, wenn das elektrische Heizsystem weiterhin eine Bedieneinrichtung zum Einstellen einer Soll-Innenraumtemperatur und/oder einen Ausblastemperatursensor und/oder einen Innenraumtemperatursensor und/oder einen Außentemperatursensor umfasst.

Auch besteht eine Erweiterungsmöglichkeit des elektrischen Heizsystems auf zwei- oder mehrzonige Heizsysteme mit zwei oder mehreren Schaltreglern (DC/DC-Wandlem) bzw. mit zwei- oder mehreren PTC-Heizeinrichtungen.

Erfindungsgemäß wird darüber hinaus ein Verfahren zur stufenlosen Ansteuerung einer elektrischen Heizeinrichtung, insbesondere einer elektrischen PTC-Heizeinrichtung für ein Kraftfahrzeug, welche zumindest ein PTC-Heizelement aufweist, gemäß Anspruch 8 bereitgestellt. Durch das erfindungsgemäße Verfahren kann eine adäquate Innenraumtemperaturregelung durch die stufenlose Einstellbarkeit der PTC-Heizleistung erreicht werden.

Erfindungsgemäß umfasst das Verfahren die folgenden Schritte: Vergleichen einer Soll-Innenraumtemperatur mit einer gemessenen Innenraumtemperatur; Ermitteln einer Innenraumregler-Stellgröße unter Einbeziehung einer Außentemperatur, wobei aus der ermittelten Stellgröße eine Soll-Ausblastemperatur abgeleitet wird; Vergleichen der Soll-Ausblastemperatur mit einer gemessenen Ausblastemperatur; Zuführen der Soll-Ausblastemperatur an einen Ausblastemperaturregler, Ermitteln einer Ausblastemperaturregler-Stellgröße; und Zuführen der Ausblastemperaturregler-Stellgröße an den DC/DC-Wandler.

Jedoch kann in einem einfacheren System der unterlagerte Ausblastemperatur-Regelkreis entfallen, wobei dann eine direkte Regelung der Innenraumtemperatur erfolgt.

Erfindungsgemäß generiert der DC/DC-Wandler aus der Ausblastemperaturregler-Stellgröße eine Ausgangsspannung, insbesondere zwischen 0V und der sekundären Bordnetzspannung von beispielsweise 300 V.

Ganz besonders bevorzugt wird gemäß dem Verfahren als DC/DC-Wandler ein Tiefsetzsteller eingesetzt. Alternativ kann, wenn das Verfahren zur Regelung einer an ein 12V-Bordnetz angeschlossenen PTC-Heizeinrichtung eingesetzt wird, der DC/DC-Wandler als Hochsetzsteller vorgesehen sein.

Vorzugsweise wird das Verfahren zum Regeln der Heizleistung eines elektrischen PTC-Zuheizers eingesetzt. Dabei wird eine vorteilhafte "geglättete Betriebsweise" des PTC-Zuheizers erreicht.

Gemäß noch einer weiteren bevorzugten Ausführungsform wird der elektrische Zuheizer in einer Kraftfahrzeugklimaanlage eingesetzt.

Im Folgenden wird die Erfindung anhand eines Ausführungsbeispiels unter Bezugnahme auf die Zeichnung detailliert erläutert. In der Zeichnung zeigen:
- Fig.1: eine Ansicht einer elektrischen Heizeinrichtung gemäß dem Stand der Technik;
- Fig. 2: eine Ansicht eines PTC-Heizelements gemäß dem Stand der Technik;
- Fig. 3: ein Regelungs-Blockschaltbild für eine elektrische Heizeinrichtung.
- Fig. 4: eine schematische Ansicht eines Ausführungsbeispiels gemäß vorliegender Erfindung.
- Fig. 5: eine schematische Ansicht eines Ausführungsbeispiels gemäß vorliegender Erfindung.
- Fig. 6: eine schematische Ansicht einer Klimaanlage mit einer Ausführungsform eines elektrischen Heizsystems gemäß vorliegender Erfindung.

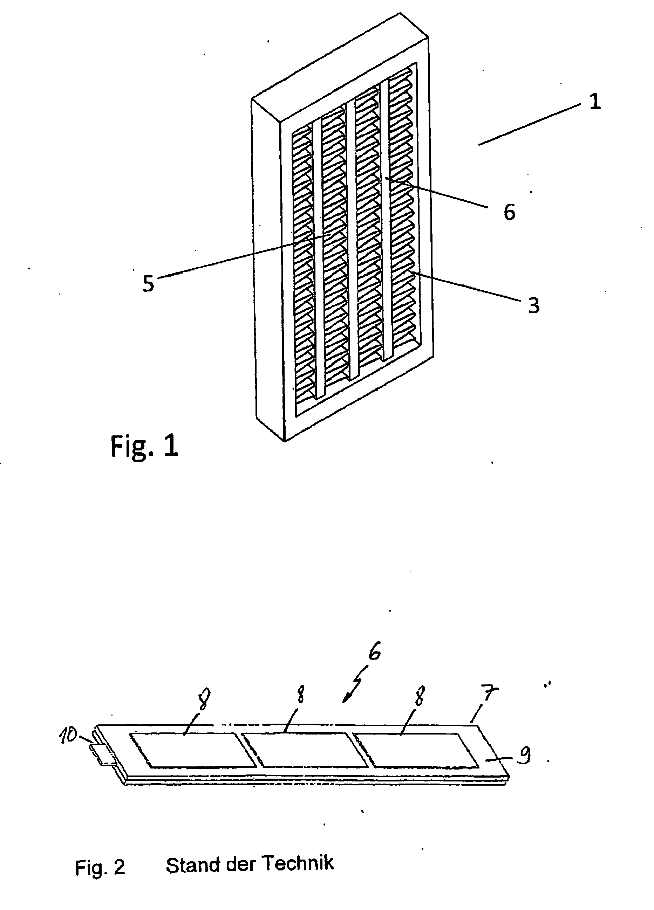

Figur 1 zeigt eine Ansicht einer elektrischen Heizeinrichtung 1 gemäß dem Stand der Technik. Bei der elektrischen Heizeinrichtung 1 handelt es sich um eine PTC-Heizeinrichtung, die in einer Kraftfahrzeugklimaanlage als elektrischer Zuheizer eingesetzt wird. Bei diesen elektrischen PTC-Heizeinrichtungen erfolgt die Umwandlung von elektrischer Energie aus dem Bordnetz des Fahrzeugs in Wärme in der Regel in einem PTC-Element (Po*sitive Temperature Coefficient*). Dieser Kaltleiter aus Keramik ist ein sehr stark temperaturabhängiger Halbleiterwiderstand. Das heißt, dass mit zunehmender Temperatur der Widerstand des Keramik-Elements sehr stark zunimmt. Dadurch stellt sich unabhängig von den Randbedingungen - wie z. B. angelegte Spannung, Nominalwiderstand, Luftmenge über dem PTC-Element - eine sehr gleichmäßige Oberflächentemperatur am PTC-Element ein. Dadurch wird eine Überhitzung verhindert, wie sie z. B. mit einem normalen Wärme abgebenden Heizdraht bei unzureichender Luftmenge auftreten könnte.

Die hier gezeigte elektrische Heizeinrichtung 1 ist an das Bordnetz eines Kraftfahrzeugs anschließbar, welches eine Spannung von beispielsweise ≥ 300V liefert. Die elektrische Heizeinrichtung 1 umfasst eine Vielzahl von Wellrippen 3 und PTC-Heizelementen 6 (welche detaillierter im Zusammenhang mit Figur 2 beschrieben werden), die in abwechselnder Folge angeordnet sind und ein Heiznetz 5 bilden.

Figur 2 zeigt ein PTC-Heizelement 6 gemäß dem Stand der Technik. In einem Rahmen 7 sind in dieser Ausführungsform auf jeder der beiden gegenüberliegenden Seiten jeweils drei PTC-Keramiken 8 gehalten, wovon in dieser Ansicht nur die drei an der Vorderseite 9 des Rahmens 7 gehaltenen PTC-Keramiken 8 sichtbar sind. Über den Anschluss 10 ist das PTC-Heizelement 6 an eine Energieversorgung (nicht dargestellt) anschließbar.

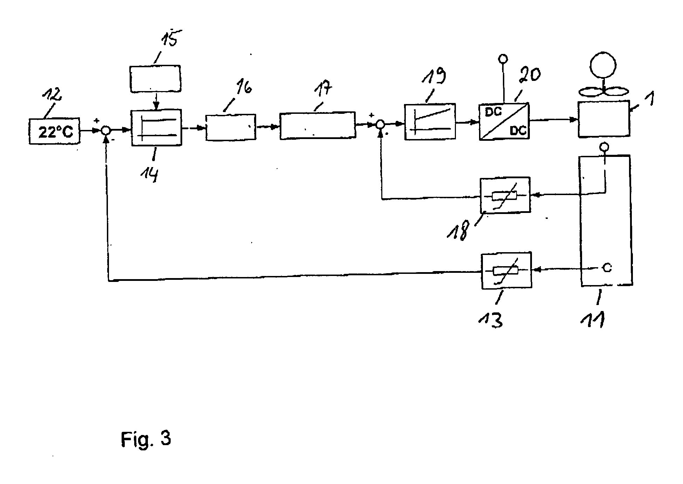

Fig. 3 ist ein Regelungs-Blockschaltbild für eine elektrische Heizeinrichtung 1, mittels welchem die Funktionsweise des elektrischen Heizsystems gemäß einer Ausführungsform bzw. das Steuerungsverfahren für eine elektrische PTC-Heizeinrichtung erläutert wird. An einer Bedieneinrichtung 12, welche beispielsweise in einem Bedienpanel in einem Armaturenbrett eines Kraftfahrzeugs (nicht dargestellt) vorgesehen ist, ist eine gewünschte Soll-Innenraumtemperatur, hier durch den Wert "22°" angedeutet, einstellbar. Die Soll-Innenraumtemperatur soll in einer Fahrzeugkabine 11 erreicht bzw. eingestellt werden. Ein Innenraumtemperatursensor 13 misst eine tatsächliche Innenraumtemperatur in der Fahrzeugkabine 11 des Kraftfahrzeugs. Der gemessene Temperaturwert sowie der Soll-Temperaturwert werden verglichen und einem P-Innenraumregler 14 zugeführt. Darüber hinaus wird in dieser Ausführungsform mittels eines Außentemperatursensors 15 eine Außentemperatur gemessen und der gemessene Wert wird ebenfalls dem P-Innenraumregler 14 zugeführt. Der P-Innenraumregler 14 ermittelt unter Einbeziehung der Außentemperatur anhand der Kennlinie 16 eine Innenraumregler-Stellgröße, woraus auf bekannte Art und Weise eine Soll-Ausblastemperatur 17 abgeleitet wird, die wiederum mit einer von einem Ausblastemperatursensor 18, der beispielsweise in einem Fußraumkanal einer Kraftfahrzeugklimaanlage angeordnet sein kann, gemessenen Ausblastemperatur verglichen wird und einem PI-Ausblastemperaturregler 19 zugeführt wird.

Die Stellgröße des PI-Ausblastemperaturreglers 19 wird dem Schaltregler zugeführt, hier dem DC/DC-Wandler 20, der daraus eine Ausgangsspannung zwischen 0V und der zweiten Bordnetzspannung des Kraftfahrzeugs, die im Hochvoltbereich ≥ 300V liegt, generiert. Mittels der Ausgangsspannung des DC/DC-Wandlers 20 wird die Heizleistung der elektrischen Heizeinrichtung 1 über die PTC-Heizelemente immer bedarfsgerecht eingestellt.

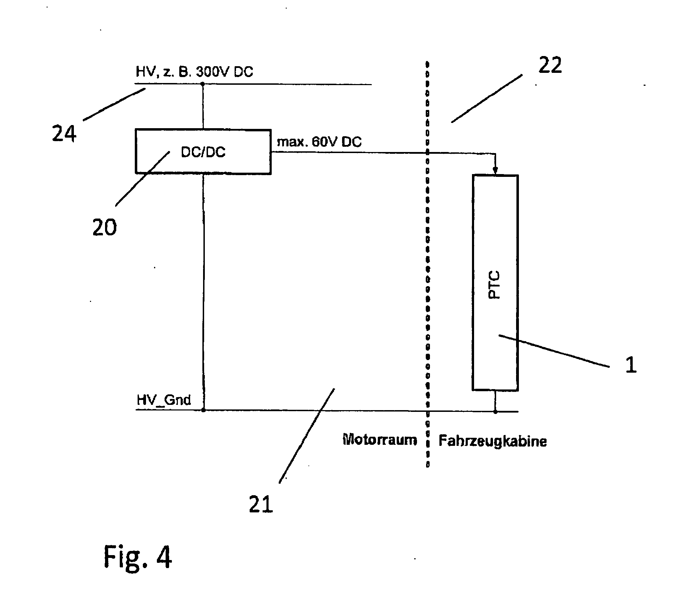

Fig. 4 zeigt ein weiteres Ausführungsbeispiel gemäß vorliegender Erfindung. In dieser Ausführungsform wird die maximale Ausgangsspannung des DC/DC-Wandlers 20 auf einen Wert von 60 V begrenzt.

Bei einer derartigen Auslegung mit maximaler Ausgangsspannung des DC/DC-Wandlers liegt das Hochvolt-Bordnetz 23 vollständig außerhalb der Fahrzeugkabine 22 im Motorraum 21. Durch die geringe Spannung von 60 V kann auf entsprechende Isolations-Schutzmaßnahmen verzichtet werden, so dass eine verschlechterte Heizleistungsübertragungscharakteristik aufgrund der Isolation von vornherein vermieden wird.

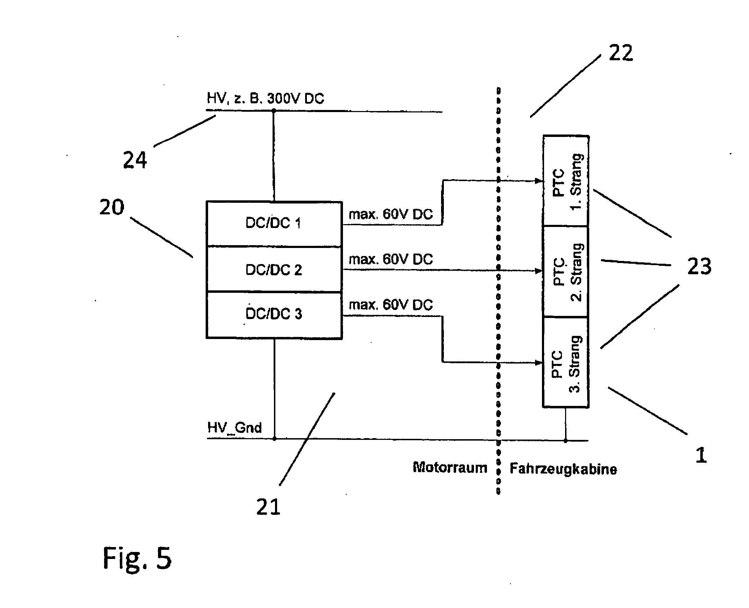

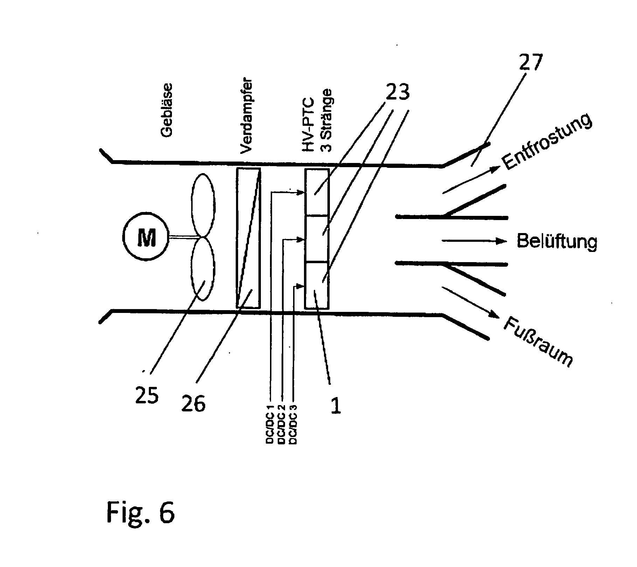

Die Fig. 5 und Fig. 6 zeigen ein weiteres Ausführungsbeispiel gemäß vorliegender Erfindung. Hierbei weist die elektrische Heizeinrichtung 1 mehrere, beispielsweise drei PTC-Stränge 23 auf, die durch mehrere PTC-Heizelemente gebildet werden. Jeder der drei PTC-Stränge ist durch einen eigenen DC/DC Wandler (DC/DC 1, DC/DC 2, DC/DC 3) stufenlos ansteuerbar. Ähnlich dem Ausführungsbeispiel gemäß Fig. 4 beträgt die Ausgangsspannung jedes DC/DC Wandlers 60 V. Sie kann jedoch auch höhere Werte betragen. Eine derartige Anordnung ermöglicht insbesondere eine verbesserte beziehungsweise effizientere Temperaturschichtung.

Fig. 6 zeigt einen typischen Aufbau einer Klimaanlange, aufweisend ein Gebläse 25, einen Verdampfer 26 und eine elektrische Heizeinrichtung 1 mit drei PTC-Strängen 23. Durch die Aufteilung der Heizeinrichtung 1 in drei Stränge ist jeder Strang einem Luftkanal 27 - namentlich einem Entfrostungskanal, einem Belüftungskanal und einem Fußraumkanal - zuordenbar. Somit lässt sich auf einfache Weise jeder Luftkanal individuell temperieren.

Insgesamt kann mit dem elektrischen Heizsystem, welches eine elektrische Heizeinrichtung aufweist, dessen Temperatur über die Ausgangsspannung eines DC/DC-Wandlers geregelt wird, stufenlos eine "geglättete Betriebsweise" einer PTC-Heizeinrichtung verlustleistungsarm erzielt werden.

### Bezugszeichenliste

- 1: elektrische Heizeinrichtung
- 3: Wellrippe
- 5: Heiznetz
- 6: PTC-Heizelement
- 7: Rahmen
- 8: PTC-Keramik
- 9: Vorderseite
- 10: Anschluss
- 11: Fahrzeugkabine
- 12: Bedieneinrichtung
- 13: Innenraumtemperatursensor
- 14: P-Innenraumregier
- 15: Außentemperatursensor
- 16: Kennlinie
- 17: Soll-Ausblastemperatur
- 18: Ausblastemperatursensor
- 19: PI-Ausblastemperaturregler
- 20: DC/DC-Wandler
- 21: Motorraum
- 22: Fahrzeugkabine
- 23: PTC-Strang
- 24: Hochvolt-Bordnetz
- 25: Gebläse
- 26: Verdampfer
- 27: Luftkanal

## Patentansprüche

1. Elektrisches Heizsystem, insbesondere für ein Kraftfahrzeug, welches zumindest eine elektrische Heizeinrichtung (1) mit zumindest einem an eine Energiequelle angeschlossenem PTC-Heizelement (6), und zumindest eine Vorrichtung zur stufenlosen Ansteuerung des PTC-Heizelements (6) aufweist, **dadurch gekennzeichnet, dass** die zumindest eine Vorrichtung zur stufenlosen Ansteuerung des PTC-Heizelements einen DC/DC-Wandler (20) umfasst, welcher die Heizleistung des zumindest einen PTC-Heizelements (6) regelt, wobei das elektrische Heizsystem weiterhin einen Ausblastemperaturregler (19) umfasst, welcher dem DC/DC-Wandler (20) eine Stellgröße zuführt und der DC/DC-Wandler (20) eine Ausgangsspannung aus der Stellgröße generiert.

2. Elektrisches Heizsystem nach Anspruch 1, **dadurch gekennzeichnet dass** der DC/DC-Wandier (20) ein Tiefsetzsteller oder ein Hochsetzsteller ist.

3. Elektrisches Heizsystem nach Anspruch 1 oder 2, **dadurch gekennzeichnet, dass** die PTC-Heizleistung durch die Ausgangsspannung des DC/DC-Wandlers (20) einstellbar ist.

4. Elektrisches Heizsystem nach einem der Ansprüche 1 bis 3, **dadurch gekennzeichnet, dass** die Ausgangsspannung des DC/DC-Wandlers (20) begrenzt ist, insbesondere auf eine Spannung von 60 V.

5. Elektrisches Heizsystem nach einem oder mehreren der Ansprüche 1 bis 4, **dadurch gekennzeichnet dass** das elektrische Heizsystem weiterhin eine Bedieneinrichtung (12) zum Einstellen einer Soll-Innenraumtemperatur und/oder einen Ausblastemperatursensor (18) und/oder einen Innenraumtemperatursensor (13) und/oder einen Außentemperatursensor (15) umfasst.

6. Elektrisches Heizsystem nach einem der Ansprüche 1 bis 5, **dadurch gekennzeichnet, dass** mehrere PTC-Heizelemente (6) einen PTC-Strang (23) bilden, wobei die Heizleistung jedes PTC-Strangs durch einen DC/DC-Wandler (20) geregelt wird.

7. Elektrisches Heizsystem nach Anspruch 6, **dadurch gekennzeichnet, dass** genau drei PTC-Stränge (23) vorgesehen sind, wobei jeder PTC-Strang einem Luftkanal (27) einer Klimaanlage zuordenbar ist.

8. Verfahren zur stufenlosen Ansteuerung einer elektrischen Heizeinrichtung (1), insbesondere einer elektrischen PTC-Heizeinrichtung für ein Kraftfahrzeug, welche zumindest ein PTC-Heizelement (6) aufweist, **dadurch gekennzeichnet, dass** die Spannung der elektrischen Heizeinrichtung (1) mittels einer Ausgangsspannung eines DC/DC-Wandlers (20) geregelt wird, wobei das Verfahren die folgenden Schritte umfasst
- Vergleichen einer Soll-Innenraumtemperatur mit einer gemessenen Innenraumtemperatur;
- Ermitteln einer Innenraumregler-Stellgröße unter Einbeziehung einer Außentemperatur, wobei aus der ermittelten Stellgröße eine Soll-Ausblastemperatur abgeleitet wird;
- Vergleichen der Soll-Ausblastemperatur mit einer gemessenen Ausblastemperatur;
- Zuführen der Soll-Ausblastemperatur an einen Ausblastemperaturregler (19);
- Ermitteln einer Ausblastemperaturregler-Stellgröße;
- Zuführen der Ausblastemperaturregier-Stellgröße an den DC/DC-Wandler (20)
- Generieren einer Ausgangsspannung des DC/DC-Wandlers (20) aus der Ausblastemperaturregler-Stellgröße.

9. Verfahren nach Anspruch 8, **dadurch gekennzeichnet, dass** als DC/DC-Wandler (20) ein Tiefsetzsteller oder ein Hochsetzsteller eingesetzt wird.

10. Verfahren nach einem der Ansprüche 8 oder 9, **dadurch gekennzeichnet, dass** das Verfahren zum Regeln der Heizleistung eines elektrischen PTC-Zuheizers eingesetzt wird.

11. Verfahren nach einem der Ansprüche 8 bis 10, **dadurch gekennzeichnet, dass** die Ausgangsspannung des DC/DC Wandlers begrenzt wird, insbesondere auf einen Wert von 60 V.

## Claims

1. An electric heating system, in particular for a motor vehicle, said electric heating system having at least one electric heater (1) with at least one PTC heating element (6) connected to an energy source, and at least one device for continuously controlling the PTC heating element (6), **characterised in that** the at least one device for continuously controlling the PTC heating element comprises a DC/DC converter (20), which controls the heating power of the at least one PTC heating element (6), wherein the electric heating system further comprises a discharge temperature controller (19), which supplies a control variable to the DC/DC converted (20), and the DC/DC converter (20) generates an output voltage from the control variable.

2. The electric heating system according to claim 1, **characterised in that** the DC/DC converter (20) is a step-down converter or a step-up converter.

3. The electric heating system according to claim 1 or 2, **characterised in that** the ETC heating power can be set by the output voltage of the DC/DC converter (20).

4. The electric heating system according to one of claims 1 to 3, **characterised in that** the output voltage of the DC/DC converter (20) is limited, in particular to a voltage of 60 V.

5. The electric heating system according to one or more of claims 1 to 4, **characterised in that** the electric heating system further comprises an operating unit (12) for setting a target interior temperature and/or a discharge temperature sensor (18) and/or an interior temperature sensor (13) and/or an exterior temperature sensor (15).

6. The electric heating system according to one of claims 1 to 5, **characterised in that** a plurality of PTC heating elements (6) form a PTC strand (23), wherein the heating power of each PTC strand is controlled by a DC/DC converter (20).

7. The electric heating system according to claim 6, **characterised in that** exactly three PTC strands (23) are provided, wherein each PTC strand can be assigned to an air duct (27) of an air-conditioning system.

8. A method for continuously controlling an electric heater (1), in particular an electric PTC heater for a motor vehicle, which has at least one PTC heating element (6), **characterised in that** the voltage of the electric heater (1) is controlled by means of an output voltage of a DC/DC converter (20), wherein the method comprises the following steps:
- comparing a target interior temperature with a measured interior temperature;
- establishing an interior controller control variable with inclusion of an exterior temperature, wherein a target discharge temperature is derived from the established control variable;
- comparing the target discharge temperature with a measured discharge temperature;
- supplying the target discharge temperature to a discharge temperature controller (19),
- establishing ; discharge temperature controller control variable;
- generating an output voltage of the DC/DC converter (20) from the discharge temperature controller control variable.
- generating an output voltage of the DC/DC converter (20) from the discharge temperature controller control variable.

9. The method according to claim 8, **characterised in that** a step-down converter or a step-up converter is used as the DC/DC converter (20).

10. The method as claimed in one of claims 8 or 9, **characterised in that** the method is used to control the heating power of an electric auxiliary PTC heater.

11. The method according to one of claims 8 to 10, **characterised in that** the output voltage of the DC/DC converter is limited, in particular to a valve of 60 V.

## Revendications

1. Système de chauffage électrique, en particulier pour un véhicule automobile, qui présente au moins un dispositif de chauffage électrique (1) comportant au moins un élément chauffant (6) à coefficient de température positif (CTP) raccordé à une source d'énergie, et au moins un dispositif pour la commande en continu de l'élément chauffant CTP (6),
**caractérisé en ce que** le dispositif au moins au nombre de un, pour la commande en continu de l'élément chauffant CTP, comprend un convertisseur continu/continu (20) qui règle la puissance de chauffage de l'élément chauffant CTP (6) au moins au nombre de un, où le système de chauffage électrique comprend en outre un régulateur de température d'air évacué (19) qui fournit une grandeur réglante au convertisseur continu/continu (20), et le convertisseur continu/continu (20) génère une tension de sortie à partir de la grandeur régnante.

2. Système de chauffage électrique selon la revendication 1, **caractérisé en ce que** le convertisseur continu/continu (20) est un transformateur dévolteur ou un transformateur survolteur.

3. Système de chauffage électrique selon la revendication 1 ou 2, **caractérisé en ce que** la puissance de chauffage CTP est réglable par la tension de sortie du convertisseur continu/continu (20).

4. Système de chauffage électrique selon l'une quelconque des revendications 1 à 3, **caractérisé en ce que** la tension de sortie du convertisseur continu/continu (20) est limitée, en particulier à une tension de 60 V.

5. Système de chauffage électrique selon l'une ou plusieurs des revendications 1 à 4, **caractérisé en ce que** le système de chauffage électrique comprend en outre un dispositif de commande (12) servant au réglage d'une température théorique de l'habitacle et/ou un capteur de température d'air évacué (18) et/ou un capteur de température de l'habitacle (13) et/ou un capteur de température extérieure (15).

6. Système de chauffage électrique selon l'une quelconque des revendications 1 à 5, **caractérisé en ce que** plusieurs éléments chauffants CTP (6) forment une branche CTP (23), où la puissance de chauffage de chaque branche CTP est réglée par un convertisseur continu/continu (20).

7. Système de chauffage électrique selon la revendication 6, **caractérisé en ce qu'**il est prévu précisément trois branches CTP (23), où chaque branche CTP peut être associée à un conduit d'air (27) d'un système de climatisation.

8. Procédé de commande en continu d'un dispositif de chauffage électrique (1), en particulier d'un dispositif de chauffage électrique à coefficient de température positif (CTP) pour un véhicule automobile, lequel dispositif de chauffage électrique présente au moins un élément chauffant CTP (6),
**caractérisé en ce que** la tension du dispositif de chauffage électrique (1) est réglée au moyen d'une tension de sortie d'un convertisseur continu/continu (20), où le procédé comprend les étapes suivantes consistant :
- à comparer une température théorique de l'habitacle, à une température mesurée de l'habitacle ;
- à déterminer une grandeur réglante affectée au régulateur de l'habitacle en intégrant une température extérieure, où une température théorique d'air évacué est déduite de la grandeur régnante déterminée ;
- à comparer la température théorique d'air évacué, à une température mesurée d'air évacué ;
- à fournir la température théorique d'air évacué, à un régulateur de température d'air évacué (19) ;
- à déterminer une grandeur réglante affectée au régulateur de température d'air évacué ;
- à fournir la grandeur réglante affectée au régulateur de température d'air évacué, à un convertisseur continu/continu (20) ;
- à générer une tension de sortie du convertisseur continu/continu (20) à partir de la grandeur réglante affectée au régulateur de température d'air évacué.

9. Procédé selon la revendication 8, **caractérisé en ce qu'**un transformateur dévolteur ou un transformateur survolteur est utilisé comme convertisseur continu/continu (20).

10. Procédé selon l'une des revendications 8 ou 9, **caractérisé en ce que** le procédé est utilisé pour le réglage de la puissance de chauffage d'un dispositif de chauffage électrique auxiliaire CTP.

11. Procédé selon l'une quelconque des revendications 8 à 10, **caractérisé en ce que** la tension de sortie du convertisseur continu/continu est limitée, en particulier à une valeur de 60 V.
